# EUROPÄISCHE PATENTSCHRIFT

(11) **EP 3 463 795 B1**
(45) Veröffentlichungstag und Bekanntmachung des Hinweises auf die Patenterteilung: **19.08.2020**
(21) Anmeldenummer: 17745962.5
(22) Anmeldetag: 18.05.2017
(51) Int. Cl.: B29C 45/14, B29C 65/42, B29C 65/48, B29C 65/54, B29D 23/24, B29L 23/24

(54) **VERFAHREN ZUR HERSTELLUNG EINES RINGFÖRMIG GESCHLOSSENEN ENDLOSSCHLAUCHES UND ENDLOSSCHLAUCH**
METHOD FOR PRODUCING AN ANNULARLY CLOSED ENDLESS TUBE AND ENDLESS TUBE
PROCÉDÉ DE PRODUCTION D'UN TUYAU FLEXIBLE CONTINU ANNULAIRE FERMÉ ET TUYAU ANNULAIRE FERMÉ

(30) Priorität: 24.05.2016 AT 2612016
(43) Veröffentlichungstag der Anmeldung: 10.04.2019
(73) Patentinhaber: Lembacher, Christian, 2440 Gramatneusiedl (AT); Kertesz, Akos, 1120 Wien (AT)
(72) Erfinder: Lembacher, Christian, 2440 Gramatneusiedl (AT); Kertesz, Akos, 1120 Wien (AT)
(86) Internationale Anmeldenummer: PCT/AT2017/000038
(87) Internationale Veröffentlichungsnummer: WO 2017/201554

(56) Entgegenhaltungen:
- WO-A1-2014/146789
- US-A- 2 512 774

## Beschreibung

Die Erfindung betrifft ein Verfahren zur Herstellung eines ringförmig geschlossenen Endlosschlauches (Torus) aus einem offenen, aus Kunststoff hergestellten Schlauch gemäß dem Oberbegriff von Anspruch 1.

Weiters betrifft die Erfindung einen Endlosschlauch, insbesondere für einen Schlauch eines Fahrzeuges, wie eines Fahrrads, Motorrads, eines Kraftfahrzeuges oder Luftfahrzeuges.

Verfahren der oben genannten Art sind aus der WO2014/146789 A1 und der US2512774 A bekannt geworden. Die US2512774 A offenbart ein Verfahren zur Herstellung eines ringförmig geschlossenen Endlosschlauches aus einem offenen, aus Kunststoff hergestellten Schlauch, wobei in einem Schritt i) einander gegenüberliegende, stirnseitige Endbereiche des offenen Schlauchs über zumindest ein Verbindungselement gezogen werden und der offene Schlauch mittels des Verbindungselementes zu einem Ring geschlossen wird, wobei der zu einem Ring geschlossene Schlauch zumindest in einem Bereich des Verbindungselementes in einem Schritt ii) zumindest abschnittsweise mit Haftmittel beschichtet wird, wobei in einem Schritt iii) das Verbindungselement durch eine nicht mit Haftmittel beschichtete Öffnung des Endlosschlauches im Bereich des Verbindungselementes oder durch eine in den Endlosschlauch eingebrachte Öffnung entfernt wird, wobei in die Öffnung ein Ventil eingesetzt wird.

Ein Verfahren zur Herstellung eines ringförmig geschlossenen Endlosschlauches ist aus der EP2497654B1 bekannt geworden. Bei dem bekannten Verfahren werden freie Enden des Schlauches zur Bildung eines geschlossenen Ringes miteinander verschweißt oder verklebt. Dies hat jedoch den Nachteil, dass im Bereich einer Verbindungsstelle der freien Enden eine Naht vorhanden ist, deren mechanische Eigenschaften von jenen des übrigen Schlauches abweichen. Insbesondere weist die Naht eine geringere mechanische Belastbarkeit auf als daran anschließende Bereiche des Schlauches.

Es ist daher eine Aufgabe der Erfindung, die oben genannten Nachteile des Stands der Technik zu überwinden und einen Kunststoffschlauch zu schaffen, der im Bereich einer Verbindungsstelle seiner freien Enden keine Naht aufweist.

Diese Aufgabe wird mit einem Schlauch der eingangs genannten Art erfindungsgemäß durch die Merkmale des Anspruchs 1 gelöst.

Die erfindungsgemäße Lösung ermöglicht die Herstellung eines Schlauches ohne eine aus mechanischer Sicht ungünstige, quer zur Umfangsrichtung des Schlauches verlaufende Naht (Quernaht). Die Erfindung ermöglicht die Herstellung eines Endlosschlauches, der als Fahrzeugschlauch, insbesondere Fahrrad-, Motorrad- oder Kraftfahrzeugschlauch, gedacht ist, wesentlich zu vereinfachen, da das Ventil direkt in die bereits vorhandene Öffnung eingesetzt wird.

Gemäß einer vorteilhaften Variante der Erfindung kann es vorgesehen sein, dass in einem Schritt i) vorhergehenden Schritt der offene Schlauch auf eine Länge abgelängt wird, die kleiner als der Umfang des ringförmig geschlossenen Endlosschlauches oder gleich dem Umfang des ringförmig geschlossenen Endlosschlauches ist. Auf diese Weise ist es möglich, schon bei einem Zuschneiden des Schlauches die Länge der Verbindungsstelle mit zu berücksichtigen.

Bevorzugterweise wird in Schritt ii) das Verbindungselement mit der Schmelze umspritzt, wobei bevorzugt die Öffnung im Bereich des Verbindungselementes nicht umspritzt wird. Ein Freilassen der Öffnung hat den Vorteil, dass dadurch ein einfaches und zeitsparendes Entfernen des Verbindungselementes ermöglicht wird.

Alternativ hierzu ist es jedoch auch möglich, dass das Verbindungselement vollständig mit der Schmelze beschichtet wird und in den ringförmig geschlossenen Endlosschlauch die Öffnung geschnitten wird, durch welche das Verbindungselement entnommen wird. Ein vollständiges Beschichten des Verbindungselementes hat den Vorteil, dass, falls ein Spritzgussverfahren hierfür zum Einsatz kommt, ein einfacheres Werkzeug verwendet werden kann.

Um einen durchgehend homogenen Schlauch und somit gleiche mechanische Eigenschaften über die gesamte Umfangslänge des Schlauches zu erhalten, kann es vorgesehen sein, dass der in Schritt ii) für das Beschichten des Verbindungselementes verwendete Kunststoff gleichartig ist wie der Kunststoff, aus welchem der in Schritt i) verwendete Schlauch hergestellt ist.

Um einen durchgehend geschlossenen Schlauch ohne Loch zu realisieren, kann die Öffnung durch Verschweißen von Randbereichen der Öffnung miteinander verschlossen werden.

Als besonders vorteilhaft sowohl hinsichtlich der Belastbarkeit des fertigen Endlosschlauches in seinem bestimmungsgemäßen Betrieb als auch hinsichtlich der Entformbarkeit des Endlosschlauches von dem Verbindungselement hat es sich erwiesen, dass der in Schritt i) verwendete offene Schlauch (2) aus einem thermoplastischen Elastomer, insbesondere TPU, TPE-A, TPE-E, TPE-O, TPE-S, TPE-U, TPE-V, Silikonelastomere hergestellt ist.

Um die Festigkeit des Verbindungsstücks der Anforderung entsprechend zu gestalten, kann es vorgesehen sein, dass in Schritt ii) das Beschichten des Verbindungselementes so erfolgt, dass eine Wandstärke des Endlosschlauches im Bereich des Verbindungselementes von einer größeren Wandstärke zu einer im Verhältnis dazu geringeren Wandstärke verläuft oder stufenförmig verläuft.

Die oben genannte Aufgabe lässt sich auch mit einem Endlosschlauch der eingangs genannten Art erfindungsgemäß dadurch lösen, dass er nach einem Verfahren gemäß einem der Ansprüche 1 bis hergestellt ist.

Die Erfindung samt weiteren Vorteilen wird im Folgenden anhand einiger nicht einschränkender Ausführungsbeispiele, welche in den Zeichnungen dargestellt sind näher erläutert. In den Zeichnungen zeigen in schematisch grob vereinfachter Form:
Fig. 1: ein Ablaufdiagramm des erfindungsgemäßen Verfahrens zur Herstellung eines Endlossch lauches;
Fig. 2 einen Bereich eines zur Herstellung eines erfindungsgemäßen Endlosschlauches verwendeten Schlauches mit einem eingesetzten Verbindungsteil als Kern und einer Matrize;
Fig. 3 eine Draufsicht auf einen Abschnitt eines erfindungsgemäßen Endlosschlauches und
Fig. 4 eine Variante eines Werkzeuges zur Herstellung eines erfindungsgemäßen Endlosschlauches.
Fig. 5 eine Variante eines Werkzeuges zur Herstellung eines erfindungsgemäßen Endlosschlauches.

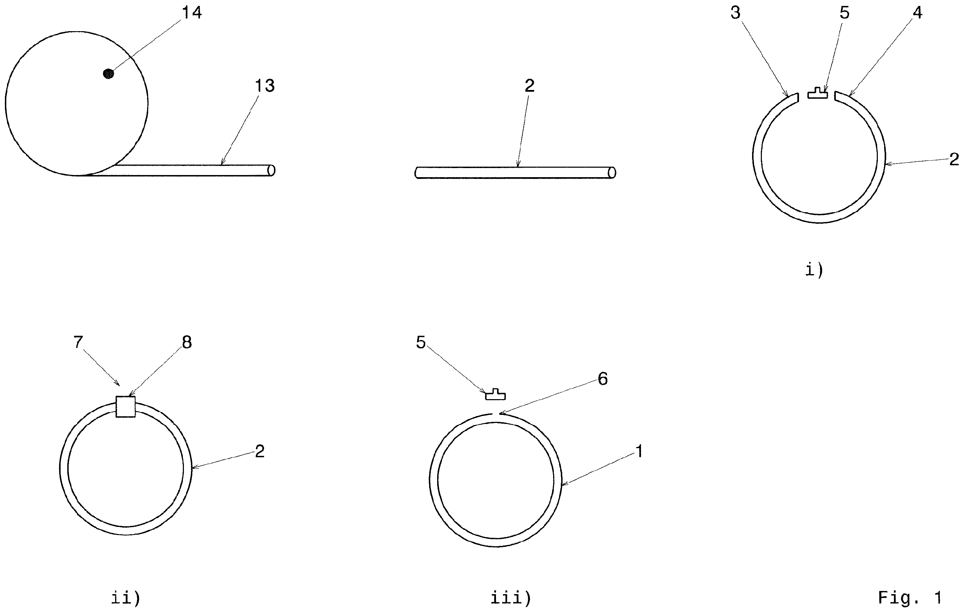

Gemäß Fig. 1 werden bei einem erfindungsgemäßen Verfahren zur Herstellung eines Endlosschlauches 1 aus einem offenen Schlauch 2 in einem Schritt i) einander gegenüberliegende, stirnseitige Endbereiche 3, 4 des offenen Schlauchs 2 über zumindest ein Verbindungselement 5 gezogen. Der offene Schlauch 2 wird hierbei mittels des Verbindungselementes 5 zu einem Ring geschlossen. Bei dem erfindungsgemäßen Endlosschlauch 1 handelt es sich besonders bevorzugt um einen Schlauch für einen Reifen eines Fahrzeugs, wie beispielsweise eines Fahrrads, Motorrads oder eines Kraftfahrzeugs.

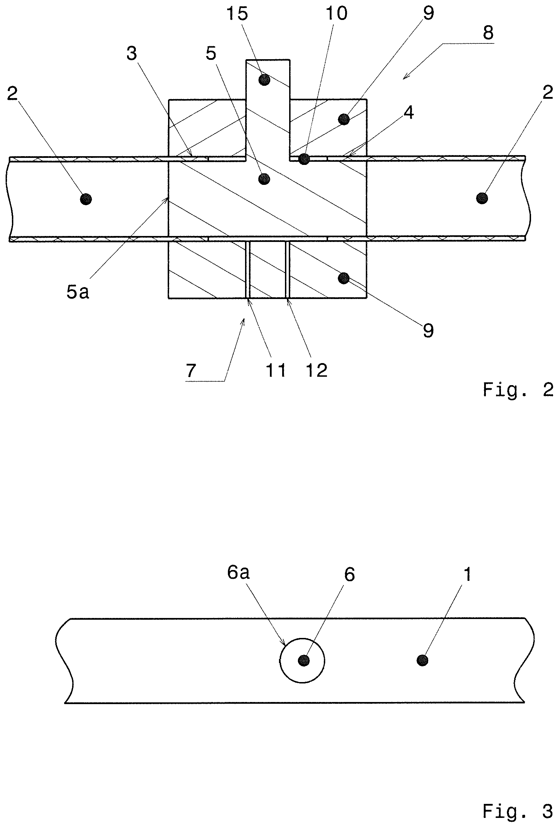

Der zu einem Ring geschlossene Schlauch 2 in einem Bereich des Verbindungselementes 5 in einem Schritt ii) zumindest abschnittsweise mit einer Schmelze 7 aus Kunststoff beschichtet wird. Das Verbindungselement 5 kann hierbei mit Ausnahme einer in Fig. 3 mit dem Bezugszeichen 6 versehenen Öffnung 6 vollständig beschichtet werden. Das Verbindungselement kann hierzu, wie beispielsweise in Fig. 2 dargestellt, in einem Bereich der nicht beschichtet werden soll einen Fortsatz 15 aufweisen. Alternativ hierzu könnte das Verbindungselement 5 auch vollständig mit der Schmelze 7 beschichtet werden und die Öffnung 7 zur Entnahme des Verbindungselementes 5 in den Endlosschlauch 1 geschnitten werden.

In einem Schritt iii) wird das Verbindungselement 5 durch die nicht mit Schmelze 7 beschichtete Öffnung 6 des Endlosschlauches 1 im Bereich des Verbindungselementes 5 oder durch die in den Endlosschlauch 1 geschnittene Öffnung 6 entfernt. Die Öffnung 6 kann durch Verschweißen von Randbereichen der Öffnung 6 miteinander verschlossen werden, falls ein Endlosschlauch 1 ohne Öffnung 6 gewünscht ist. Darüber hinaus kann in die Öffnung 6 auch ein Ventil eingesetzt werden.

Das Beschichten des Verbindungselementes 5 mit der Schmelze 7 kann wie in Fig. 2 dargestellt ist, beispielsweise durch ein Spritzgussverfahren erfolgen. So kann das Verbindungselement 5 einen Kern eines Spritzgusswerkzeuges 8 bilden. Gemeinsam mit einer Matrize 9 des Spritzgusswerkzeuges 8 kann der Kern bzw. das Verbindungselement 5 eine hohlzylinderförmige Kavität 10 umschließen. Die Schmelze 7 kann über einen oder mehrere Kanäle 11 in die Kavität 10 eingespritzt werden. Weiters kann die Kavität 10 einen oder mehrere Entlüftungskanäle 12 aufweisen. Eine Wandstärke des Schlauches 2 kann hierbei einem Normalabstand zwischen dem Verbindungselement/Kern 5 und der Matrize 9 entsprechen. Die Matrize 9 ist bevorzugt aus zwei Halbschalen gebildet, die in einem geschlossenen Zustand das Verbindungselement 5 vollständig umfassen.

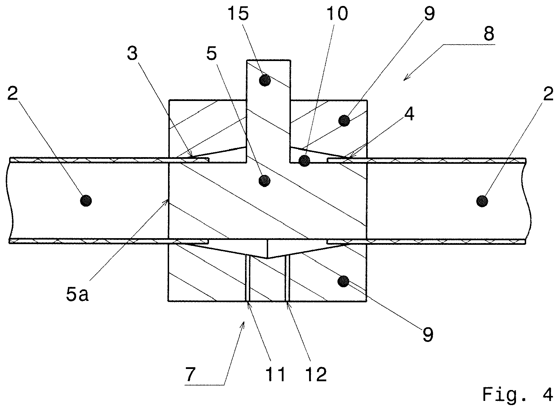

Wie aus Fig. 4 ersichtlich ist, kann Spritzgusswerkzeuges 8 auch so ausgebildet sein, dass eine Wandstärke des Endlosschlauches 1 im Bereich des Verbindungselementes 5 von einer größeren Wandstärke zu einer im Verhältnis dazu geringeren Wandstärke verläuft.

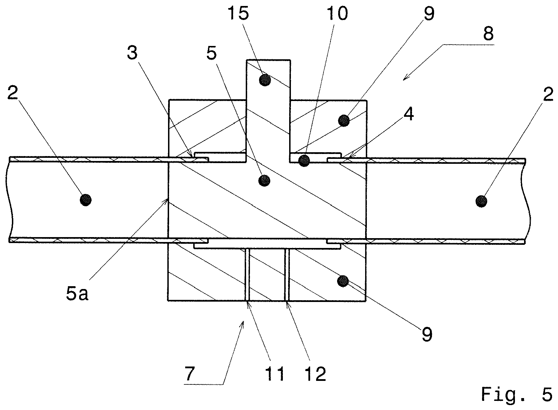

Wie aus Fig. 5 ersichtlich ist, kann Spritzgusswerkzeuges 8 auch so ausgebildet sein, dass eine Wandstärke des Endlosschlauches 1 im Bereich des Verbindungselementes 5 von einer größeren Wandstärke zu einer geringeren Wandstärke stufenförmig verläuft.

Alternativ zu einem Spritzgussverfahren kann die Schmelze auch mittels anderer bekannter Beschichtungsverfahren, wie beispielsweise Sprüh- oder Tauchbeschichtung erfolgen. Der Schlauch 2 selbst kann beispielsweise durch Extrusion, Blasformen etc. hergestellt sein. Als Rohmaterial für den Schlauch 2 kann ein Schlauch 13 großer Länge dienen, der beispielsweise zu einer Rolle 14 aufgewickelt sein kann. Von diesem Schlauch 13 großer Länge kann dann der Schlauch 2 in der gewünschten Länge abschnitten werden. In einem Schritt i) vorhergehenden Schritt kann der offene Schlauch 2 auf eine Länge abgelängt werden, die kleiner als der Umfang des ringförmig geschlossenen Endlosschlauches 1 ist. Es ist jedoch auch möglich, den Schlauch 2 so abzulängen, dass seine Länge dem Umfang des Endlosschlauches 1 entspricht.

Der in Schritt ii) für das Beschichten des Verbindungselementes verwendete Kunststoff bzw. der Kunstsoff, aus welchem die Schmelze 7 besteht, ist bevorzugterweise der gleiche wie der Kunststoff, aus welchem der in Schritt i) verwendete Schlauch 2 hergestellt ist. Als besonders günstig hat es sich hierbei herausgestellt, wenn dieser Kunststoff ein thermoplastisches Elastomer, beispielsweise auf Polyurethanbasis, insbesondere TPE-U (Thermoplastische Elastomere auf Urethanbasis), TPE-A (Thermoplastische Copolyamide), TPE-E (Thermoplastische Polyesterelastomere), TPE-O (Thermoplastische Elastomere auf Olefinbasis), TPE-S (Styrol-Blockcopolymere), TPE-V (Vernetzte thermoplastische Elastomere auf Olefinbasis). Alternativ können auch nicht thermoplastische Kunststoffe wie Silikonelastomere verwendet werden, insbesondere LSR (Liquid Silicone Rubber) Materialien..

Die Verwendung eines thermoplastischen Elastomers ermöglicht auch ein besonders einfaches Entfernen des Verbindungselementes 5 durch die Öffnung 6. So kann beispielsweise ein Endbereich 6a der Öffnung 6 über eine Stirnkante 5a des Verbindungselementes gezogen und der Verbindungsteil 5 durch die Öffnung 6 aus dem Endlosschlauch 1 entnommen werden.

## Patentansprüche

1. Verfahren zur Herstellung eines ringförmig geschlossenen Endlosschlauches (1) aus einem offenen, aus Kunststoff hergestellten Schlauch (2), wobei in einem Schritt i) einander gegenüberliegende, stirnseitige Endbereiche (3, 4) des offenen Schlauchs (2) über zumindest ein Verbindungselement (5) gezogen werden und der offene Schlauch (2) mittels des Verbindungselementes (5) zu einem Ring geschlossen wird, wobei der zu einem Ring geschlossene Schlauch (2) zumindest in einem Bereich des Verbindungselementes (5) in einem Schritt ii) zumindest abschnittsweise mit einer Schmelze (7) aus Kunststoff beschichtet wird, wobei in Z einem Schritt iii) das Verbindungselement (5) durch eine nicht mit Schmelze beschichtete Öffnung (6) des Endlosschlauches (1) im Bereich des Verbindungselementes (5) oder durch eine in den Endlosschlauch (1) eingebrachte Öffnung (6) entfernt wird, wobei die Öffnung (6) ein Ventil eingesetzt Z wird. Z

2. Verfahren nach Anspruch 1, **dadurch gekennzeichnet, dass** in einem Schritt i) vorhergehenden Schritt der offene Schlauch (2) auf eine Länge abgelängt wird, die kleiner als der Umfang des ringförmig geschlossenen Endlosschlauches (1) oder gleich dem Umfang des ringförmig geschlossenen Endlosschlauches ist.

3. Verfahren nach Anspruch 1 oder 2, **dadurch gekennzeichnet, dass** in Schritt ii) das Verbindungselement (5) mit der Schmelze umspritzt wird, wobei bevorzugt die Öffnung (7) im Bereich des Verbindungselementes (5) nicht umspritzt wird.

4. Verfahren nach einem der Ansprüche 1 bis 3, **dadurch gekennzeichnet, dass** das Verbindungselement (5) vollständig mit der Schmelze beschichtet wird und in den ringförmig geschlossenen Endlosschlauch (1) die Öffnung geschnitten wird, durch welche das Verbindungselement entnommen wird.

5. Verfahren nach einem der Ansprüche 1 bis 4, **dadurch gekennzeichnet, dass** der in Schritt ii) für das Beschichten des Verbindungselementes (5) verwendete Kunststoff gleichartig ist wie der Kunststoff, aus welchem der in Schritt i) verwendete Schlauch (2) hergestellt ist.

6. Verfahren nach einem der Ansprüche 1 bis 5, **dadurch gekennzeichnet, dass** die Öffnung (6) durch Verschweißen von Randbereichen der Öffnung (6) miteinander verschlossen wird.

7. Verfahren nach einem der Ansprüche 1 bis 6, **dadurch gekennzeichnet, dass** der in Schritt i) verwendete offene Schlauch (2) aus einem Elastomer, beispielsweise einem nicht thermoplastischem Elastomer, wie Silikonkautschuk, oder einem thermoplastischen Elastomer, wie TPU, TPE-A, TPE-E, TPE-O, TPE-S, TPE-U, TPE-V hergestellt ist.

8. Verfahren nach einem der Ansprüche 1 bis 7, **dadurch gekennzeichnet, dass** in Schritt ii) das Beschichten des Verbindungselementes (5) so erfolgt, dass eine Wandstärke des Endlosschlauches (1) im Bereich des Verbindungselementes (5) von einer größeren Wandstärke zu einer im Verhältnis dazu geringeren Wandstärke verläuft oder stufenförmig verläuft (siehe Fig 5).

9. Endlosschlauch (1), insbesondere für einen Schlauch eines Fahrzeuges, wie eines Fahrrads, Motorrads, eines Kraftfahrzeuges oder Luftfahrzeuges, der nach einem Verfahren gemäß einem der Ansprüche 1 bis 8 hergestellt ist.

## Claims

1. Method for producing an annularly closed endless tube (1) from an open tube (2) made of plastic, wherein in a step i) opposite end regions (3, 4) of the open tube (2) are pulled over at least one connecting element (5) and the open tube (2) is closed to form a ring by means of the connecting element (5), wherein the tube (2) being closed to a ring is coated in step ii) with a melt (7) made of plastic at least in a region of the connecting element (5), wherein in a step iii) the connecting element (5) is removed through an opening (6) of the endless tube (1) in the region of the connecting element (5) not coated with melt or through an opening (6) introduced into the endless tube (1), wherein a valve is inserted into the opening (6).

2. Method according to Claim 1, **characterized in that** in a step preceding the step i), the open tube (2) is cut to a length which is less than the circumference of the annularly closed endless tube (1) or equal to the circumference of the annularly closed endless tube.

3. Method according to Claim 1 or 2, **characterized in that** in step ii) the connecting element (5) is spray-coated with the melt, wherein the opening (7) in the region of the connecting element (5) preferably is not being coated.

4. Method according to one of claims 1 to 3, **characterized in that** the connecting element (5) is completely coated with the melt and the opening through which the connecting element is removed is cut into the annularly closed endless tube (1).

5. Method according to one of claims 1 to 4, **characterized in that** the plastic used for coating the connecting element (5) in step ii) is the same as the plastic from which the tube (2) used in step i) is made.

6. Method according to one of claims 1 to 5, **characterized in that** the opening (6) is closed by welding edge regions of the opening (6) together.

7. Method according to one of claims 1 to 6, **characterized in that** the open tube (2) used in step i) is made of a thermoplastic elastomer, in particular TPU, TPE-A, TPE-E, TPE-O, TPE-S, TPE- U, TPE-V or a non-thermoplastic material, for example a silicone elastomer, in particular an LSR (Liquid Silicone Rubber) material.

8. Method according to one of claims 1 to 7, **characterized in that** in step ii) the connecting element (5) is coated in such a way that a wall thickness of the endless tube (1) in the region of the connecting element (5) changes from a larger wall thickness to a relatively smaller wall thickness or in stepwise manner (see FIG. 5).

9. Endless tube (1), in particular for a vehicle tube, such as a bicycle, motorcycle, motor vehicle or aircraft, which is produced by means of a method according to one of claims 1 to 8.

## Revendications

1. Procédé pour réaliser un tube sans fin fermé en anneau (1) à partir d'un tube ouvert fabriqué en plastique {2), sachant que, en une étape i), on tire les extrémités frontales opposées (3, 4) du tube ouvert (2) l'une dans l'autre avec au moins un élément de liaison (5) et qu'on ferme le tube ouvert (2) en un anneau fermé avec l'élément de liaison (5), sachant que le tube fermé en anneau (2) sera recouvert d'une masse de fonte (7) en plastique au moins au niveau de l'élément de liaison (5) et au moins par sections en une étape ii), sachant que <en> une étape iii), on retire l'élément de liaison (5) du tube sans fin (1) par une ouverture non revêtue (6) du tube sans fin (1) au niveau de l'élément de liaison (5) ou par une ouverture (6) réalisée dans le tube sans fin (1), < sachant que > une valve sera insérée dans l'ouverture {6)<. >

2. Procédé d'après la revendication 1, se distinguant par le fait que, en une étape qui précède l'étape i), on raccourcit le tube ouvert (2) sur une longueur inférieure ou égale à la circonférence du tube sans fin fermé en anneau (1).

3. Procédé d'après la revendication 1 ou 2, se distinguant par le fait que, dans l'étape ii), l'élément de liaison (5) est enveloppé de masse fondue excepté l'ouverture {7) au niveau de l'élément de liaison (5).

4. Procédé d'après l'une des revendications 1 à 3, se distinguant par le fait que l'élément de liaison (5) est entièrement revêtu de masse fondue, et qu'une ouverture est découpée dans le tube sans fin fermé en anneau (1) pour y retirer l'élément de liaison.

5. Procédé d'après l'une des revendications 1 à 4, se distinguant par le fait que, dans l'étape ii) pour recouvrir l'élément de liaison (5) de masse fondue, le plastique employé est de même type que le plastique utilisé pour fabriquer le tube (2) dans l'étape i).

6. Procédé d'après l'une des revendications 1 à 5, se distinguant par le fait que l'ouverture (6) est refermée en soudant entre eux les bords de l'ouverture (6).

7. Procédé d'après l'une des revendications 1 à 6, se distinguant par le fait que le tube ouvert (2) utilisé dans l'étape i) est fabriqué avec un élastomère non-thermoplastique par exemple, tel que le caoutchouc de silicone, ou un élastomère thermoplastique tel que TPU, TPE-A, TPE-E, TPE-O, TPE-S, TPE-U, TPE-V.

8. Procédé qui répond à l'une des exigences 1 à 7, se distinguant par le fait que dans l'étape ii), le recouvrement de l'élément de liaison (5) d'une masse fondue se déroule de sorte que l'épaisseur de la paroi du tube sans fin (1) devienne de plus en plus mince au niveau de l'élément de liaison (5) en continu ou par paliers (voir Fig 5).

9. Tube sans fin (1), particulièrement indiqué pour une chambre à air de véhicules tels que vélo, moto,poids lourd ou avion, < et > réalisé d'après un procédé qui répond à l'une des exigences 1 à 8.
